# EUROPÄISCHE PATENTSCHRIFT

(11) **EP 1 516 420 B1**
(45) Veröffentlichungstag und Bekanntmachung des Hinweises auf die Patenterteilung: **14.11.2018**
(21) Anmeldenummer: 03740092.6
(22) Anmeldetag: 16.06.2003
(51) Int. Cl.: H02M 5/458, H02M 5/45

(54) **SCHALTUNGSANORDNUNG MIT EINEM SPANNUNGSZWISCHENKREISUMRICHTER**
CIRCUIT ARRANGEMENT WITH A VOLTAGE LINK CONVERTER
CIRCUIT COMPORTANT UN CONVERTISSEUR DE TENSION DE CIRCUIT INTERMEDIAIRE

(30) Priorität: 27.06.2002 DE 10228825
(43) Veröffentlichungstag der Anmeldung: 23.03.2005
(73) Patentinhaber: Siemens Aktiengesellschaft, 80333 München (DE)
(72) Erfinder: FUCHS, Andreas, 91056 Erlangen (DE)
(86) Internationale Anmeldenummer: PCT/DE2003/002016
(87) Internationale Veröffentlichungsnummer: WO 2004/004108

(56) Entgegenhaltungen:
- WO-A-01/71900
- DE-A- 19 833 490
- US-A- 4 005 350

## Beschreibung

Die Erfindung betrifft eine Schaltungsanordnung mit einem Spannungszwischenkreisumrichter, der einen Zwischenkreiskondensator und parallel zu diesem angeordnete Schaltzweige, die in Serie geschaltete Schaltelemente aufweisen, enthält, wobei zum Schutz vor Kurzschlussströmen und Überspannungen ein Kurzschlussthyristor vorhanden ist.

Diese Schaltelemente können abschaltbare Bauelemente, wie z.B. Thyristoren, insbesondere GTO-Thyristoren mit antiparallel geschalteten Freilaufdioden, sein.

Eine derartige Schaltungsanordnung ist aus dem Sonderdruck aus ZEV-DET Glasers Annalen, Heft 2/3 1994: Rudolf Wagner "Drehstrom-Antriebstechnik für Diesellokomotiven in Nordamerika" bekannt. Die dort beschriebene Drehstromantriebstechnik erfordert den Einsatz eines Spannungszwischenkreisumrichters zwischen der Spannungsversorgung und dem Drehstrommotor. Im Bremsbetrieb werden die Fahrmotoren zu Generatoren, so dass Strom in den Spannungszwischenkreisumrichter zurückgespeist wird. Dabei könnten im Umrichter vorhandene GTO-Thyristoren durch Überströme und Überspannungen beschädigt werden.

Aus dem genannten Aufsatz ist bekannt, zur Verhinderung solcher Schäden ein Hardware-Schutzsystem einzusetzen. Es ist im gleichen Aufsatz auch vorgeschlagen, zum Abbau einer Überspannung einen einfachen Kurzschlussthyristor einzusetzen, da dieser weniger Platz beansprucht und auch kostengünstiger ist als ein Schutzsystem.

Die geschilderten Schutzsysteme können nur eingesetzt werden, wenn der Umrichter GTO-Thyristoren aufweist, da bei diesen die Strombelastbarkeit hoch ist.

Aus der US 4 005 350 A ist eine Anordnung zum Schutz eines von einem Gleichspannungszwischenkreis gespeisten selbstgeführten Wechselrichters bekannt. Für den Schutz des Wechselrichters bei Störungen wird zusätzlich zu den vorhandenen Dioden im Stromrichter eine Reihenschaltung eines Widerstandes und einer Diode in den Zwischenkreis eingeführt, die im Falle der Umkehrung der Kondensatorspannung im Zwischenkreis einen Strom zur Entlastung des Stromrichters führt.

Der Erfindung liegt die Aufgabe zugrunde, eine Schaltungsanordnung mit einem Spannungszwischenkreisumrichter anzugeben, die die Stoßstrombelastung der Freilaufdioden der Schaltzweige im Schutzfall reduziert und es damit ermöglicht, auch Freilaufdioden mit geringerer Stoßstrombelastbarkeit als bisher einzusetzen, wie es z.B. bei den Freilaufdioden von gebondeten IGBT-Modulen der Fall ist. Insbesondere soll es möglich sein, die Schaltungsanordnung auch dann einzusetzen, wenn der Umrichter als Schaltelemente IGBTs und deren Freilaufdioden enthält.

Die Aufgabe wird durch die Schaltungsanordnung gemäss Anspruch 1 gelöst. Die Aufgabe wird gemäß der Erfindung dadurch gelöst, dass mit dem Zwischenkreiskondensator und mit den Schaltzweigen eine Kurzschlussschutzanordnung verbunden ist, bestehend aus einer Parallelschaltung des Kurzschlussthyristors mit entgegengesetzt zu diesem durchlässigen Paaren von in Serie geschalteten Schutzdioden, dass die Kurzschlussschutzanordnung parallel zum Zwischenkreiskondensator geschaltet ist und dass jeweils ein Anschlusspunkt zwischen zwei in Serie geschalteten Schaltelementen eines Schaltzweiges mit jeweils einem Anschlusspunkt zwischen zwei in Serie geschalteten Schutzdioden der Kurzschlussschutzanordnung verbunden ist.
Die Schutzdioden, die bei der Schaltungsanordnung nach der Erfindung neu sind, sind im Normalbetrieb des Umrichters nicht stromführend. Sie sind auch nicht an den Kommutierungsvorgängen des Umrichters beteiligt. Sie können daher vorteilhafterweise auf geringe Durchlassspannungen und damit auf hohe zulässige Stromstöße, die beim Zünden eines Kurzschließerthyristors auftreten können, optimiert werden. Es ist dabei unerheblich, wenn die Schutzdioden weniger gute Schalteigenschaften haben. Die guten Schalteigenschaften des Umrichters sind nämlich durch die Freilaufdioden der Schaltelemente in den Schaltzweigen gewährleistet.
Insbesondere wird der Vorteil erzielt, dass die guten Schalteigenschaften durch die Freilaufdioden der Schaltzweige gewährleistet sind, während die guten Durchlasseigenschaften durch die Schutzdioden der Kurzschlussschutzanordnung gewährleistet sind. Es ergibt sich eine vorteilhafte Kombination.

In einem Fehlerfall, d.h. bei einem Kurzschluss, wird der Kurzschlussthyristor gezündet, so dass der Zwischenkreiskondensator entladen wird. Nach der Entladung des Zwischenkreiskondensators sind jeweils ein zugeordnetes Schutzdiodenpaar und ein Freilaufdiodenpaar der Schaltelemente eines Schaltzweiges parallel geschaltet. Folglich werden die Freilaufdioden der Schaltzweige durch die Schutzdioden von lastseitig oder netzseitig verursachten Kurzschlussströmen entlastet.

Es wird der Vorteil erzielt, dass besonders die Schaltzweige und die dort vorhandenen Schaltelemente vor Überströmen und Überspannungen geschützt werden.

Beispielsweise ist die Kurzschlussschutzanordnung nur mit dem Zwischenkreiskondensator und den Schaltzweigen der Netzseite verbunden. Nach einem anderen Beispiel ist die Kurzschlussschutzanordnung nur mit dem Zwischenkreiskondensator und den Schaltzweigen der Lastseite verbunden. Mit diesen Alternativen wird der Vorteil erzielt, dass bei Bedarf auch nur die besonders betroffenen Teile des Umrichters vor Kurzschlüssen geschützt werden können.

Die Schaltelemente der Schaltzweige sind beispielsweise IGBTs (Insulated Gate Bipolar Transistor). Solche Transistoren waren bisher selbst in Verbindung mit einem bekannten Schutz vor Kurzschlüssen nicht immer schützbar, da sie Überspannungen und Überströmen weniger gut standhalten können als GTOs. Mit der Schaltungsanordnung nach der Erfindung wird der Vorteil erzielt, dass selbst empfindlichere IGBTs und deren Freilaufdioden zuverlässig vor Kurzschlüssen geschützt werden können.

Beispielsweise ist die Kurzschlussschutzanordnung über in zwei Verbindungsleitungen angeordnete zusätzliche Schutzdioden mit dem Zwischenkreiskondensator verbunden, wobei die zusätzliche Schutzdiode der ersten Verbindungsleitung entgegengesetzt zur zusätzlichen Schutzdiode der zweiten Verbindungsleitung durchlässig ist. Damit wird der Schutz vor Kurzschlussströmen weiter verbessert, da diese hinsichtlich der Durchlassrichtung des Kurzschlussthyristors gleichgerichtet werden.

Beispielsweise sind dem Kurzschlussthyristor strombegrenzende Bauteile zugeordnet. Es kann sich dabei um einen ohmschen Widerstand, eine Induktivität, einen Transformator oder um eine Kombination solcher Bauteile handeln. Solche zusätzlichen Bauteile sind geeignet den Stromfluss weiter zu begrenzen.

Mit der Schaltungsanordnung nach der Erfindung werden mit einfachen Mitteln Kurzschlussströme zuverlässig von einem Umrichter ferngehalten, so dass sogar IGBTs im Umrichter eingesetzt werden können.

Ein Ausführungsbeispiel der Schaltungsanordnung nach der Erfindung wird anhand der Zeichnung näher erläutert:
FIG 1 zeigt eine Schaltungsanordnung mit Spannungszwischenkreisumrichter und Kurzschlussschutzanordnung.
FIG 2 zeigt eine Schaltungsanordnung, bei der nur die Netzseite des Umrichters geschützt ist.
FIG 3 zeigt eine Schaltungsanordnung, bei der nur die Lastseite des Umrichters geschützt ist.

Die FIG 4 und 5 zeigen Varianten für die in den Schaltzweigen vorhandenen in Serie geschalteten Schaltelementenpaare.

Die FIG 6 bis 9 zeigen Varianten für strombegrenzende Bauteile in Verbindung mit dem Kurzschlussthyristor.

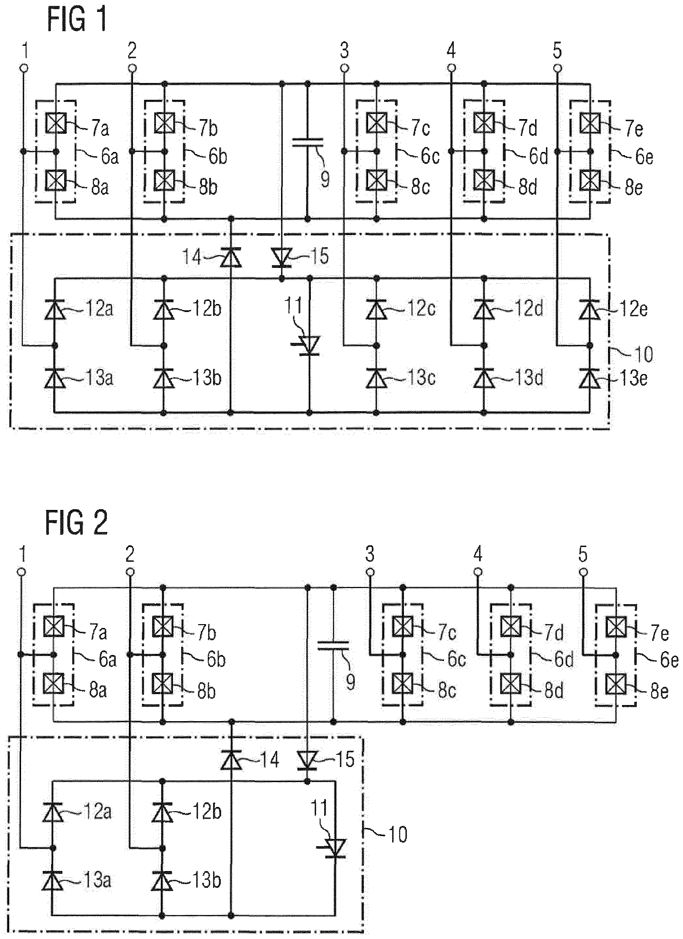

Nach Figur 1 weist ein üblicher Spannungszwischenkreisumrichter Anschlüsse 1 und 2 für eine Spannungsversorgung und Anschlüsse 3 bis 5 für einen Drehstrommotor auf. Die genannten Anschlüsse 1 bis 5 stehen jeweils mit Schaltzweigen 6a bis 6e und dort mit Anschlusspunkten zwischen in Serie geschalteten Schaltelementen 7a bis 7e einerseits und 8a bis 8e andererseits, in Verbindung. Dabei bildet eine Serienschaltung aus zwei Schaltelementen (z.B. 7a und 8a) einen Schaltzweig (z.B. 6a). Die Schaltzweige 6a bis 6e sind parallel zueinander und zu einem Zwischenkreiskondensator 9 geschaltet.

Mit dem Zwischenkreiskondensator 9 und mit den Schaltzweigen 6a bis 6e ist eine Kurzschlussschutzanordnung 10 verbunden. Diese besteht aus einer Parallelschaltung eines Kurzschlussthyristors 11 mit entgegengesetzt zu diesem durchlässigen Paaren in Serie geschalteter Schutzdioden 12a bis 12e und 13a bis 13e. Außer, dass die Kurzschlussschutzanordnung 10 parallel zum Zwischenkreiskondensator 9 geschaltet ist, ist jeweils ein Anschlusspunkt zwischen zwei in Serie geschalteten Schaltelementen 7a bis 7e und 8a bis 8e eines Schaltzweiges 6a bis 6e mit jeweils einem Anschlusspunkt zwischen zwei in Serie geschalteten Schutzdioden 12a bis 12e und 13a bis13e der Kurzschlussschutzanordnung 10 verbunden.

In den beiden Verbindungsleitungen, durch die die Parallelschaltung des Kurzschlussthyristors 11 mit dem Zwischenkreiskondensator 9 gegeben ist, ist jeweils eine zusätzliche Schutzdiode 14, 15 angeordnet. Diese Schutzdioden 14, 15 sind einander entgegengesetzt durchlässig.

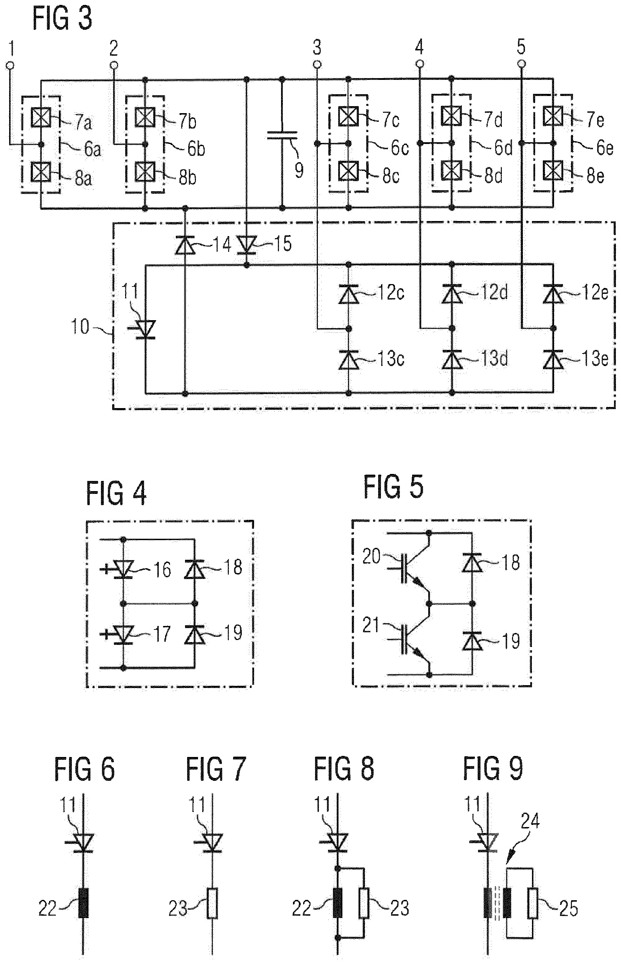

In den Figuren 1 bis 3 entsprechen gleiche Bezugszeichen gleichen Bauteilen. Die beiden Ausführungsformen der Figuren 2 und 3 unterscheiden sich von der Ausführungsform nach Figur 1 nur dadurch, dass nach Figur 2 die Kurzschlussschutzvorrichtung 10 nur dem Zwischenkreiskondensator 9 und den Schaltzweigen 6a und 6b der Netzseite zugeordnet ist, während nach Figur 3 die Kurzschlussschutzanordnung 10 nur dem Zwischenkreiskondensator 9 und den Schaltzweigen 6c bis 6e der Lastseite zugeordnet ist.

Die Figuren 4 und 5 zeigen zwei Beispiele, wie ein Schaltzweig 6 mit zwei Schaltelementen 7, 8 aufgebaut sein kann. Figur 4 zeigt zwei GTO-Thyristoren 16, 17 mit deren antiparallelen Freilaufdioden 18, 19, die jeweils in Serie geschaltet sind.

Figur 5 zeigt eine ähnliche Schaltungsanordnung wie Figur 4. Hier sind jedoch IGBT-Transistoren 20, 21 statt der GTO-Thyristoren 16, 17 aus Figur 4 vorhanden.

Die Figuren 6 bis 9 zeigen den Kurzschlussthyristor 11 in Verbindung mit zugeordneten strombegrenzenden Bauteilen. Nach Figur 6 ist eine Induktivität 22 in Serie geschaltet. Nach Figur 7 ist ein ohmscher Widerstand 23 in Serie geschaltet. Nach Figur 8 ist eine Parallelschaltung aus Induktivität 22 und ohmschem Widerstand 23 in Serie geschaltet. Nach Figur 9 ist die Primärwicklung eines Transformators 24 in Serie geschaltet, wobei die Anschlüsse der Sekundärwicklung des Transformators 24 mit einem ohmschen Widerstand 25 verbunden sind.

Mit der Schaltungsanordnung nach der Erfindung können mit einfachen Mitteln infolge von Kurzschlüssen auftretende Überspannungen und Überströme im Umrichter zuverlässig beherrscht werden. Es ist sogar möglich, in den Schaltzweigen 6a bis 6e empfindliche IGBTs und deren Freilaufdioden einzusetzen.

## Patentansprüche

1. Schaltungsanordnung mit einem Spannungszwischenkreisumrichter, der einen Zwischenkreiskondensator (9) und parallel zu diesem angeordnete Schaltzweige (6a bis 6e), die in Serie geschaltete Schaltelemente (7a bis 7e und 8a bis 8e) aufweisen, enthält, wobei die Schaltelemente (7a bis 7e und 8a bis 8e) als abschaltbare Bauelemente ausgebildet sind, wobei zum Schutz vor Kurzschlussströmen und Überspannungen ein Kurzschlussthyristor (11) vorhanden ist, wobei mit dem Zwischenkreiskondensator (9) und mit den Schaltzweigen (6a bis 6e) eine Kurzschlussschutzanordnung (10) verbunden ist, bestehend aus einer Parallelschaltung des Kurzschlussthyristors (11) mit entgegengesetzt zu diesem durchlässigen Paaren von in Serie geschalteten Schutzdioden (12a bis 12e und 13a bis 13e),
wobei die Kurzschlussschutzanordnung (10) parallel zum Zwischenkreiskondensator (9) geschaltet ist,
wobei dass jeweils ein Anschlusspunkt zwischen zwei in Serie geschalteten Schaltelementen (7a bis 7e und 8a bis 8e) eines Schaltzweiges (6a bis 6e) mit jeweils einem Anschlusspunkt zwischen zwei in Serie geschalteten Schutzdioden (12a bis 12e und 13a bis 13e) der Kurzschlussschutzanordnung (10) verbunden ist und wobei die Schutzdioden (12a bis 12e und 13a bis 13e) nicht an Kommutierungsvorgängen des Spannungszwischenkreisumrichters beteiligt sind.

2. Schaltungsanordnung nach Anspruch 1,
**dadurch gekennzeichnet, dass** die Kurzschlussschutzanordnung (10) nur mit dem Zwischenkreiskondensator (9) und den Schaltzweigen (6a und 6b) der Netzseite verbunden ist.

3. Schaltungsanordnung nach Anspruch 1,
**dadurch gekennzeichnet, dass** die Kurzschlussschutzanordnung (10) nur mit dem Zwischenkreiskondensator (9) und den Schaltzweigen (6c bis 6e) der Lastseite verbunden ist.

4. Schaltungsanordnung nach einem der Ansprüche 1 bis 3,
**dadurch gekennzeichnet, dass** die Schaltelemente (7a bis 7e und 8a bis 8e) der Schaltzweige (6a bis 6e) IGBTs sind.

5. Schaltungsanordnung nach einem der Ansprüche 1 bis 4,
**dadurch gekennzeichnet, dass** die Kurzschlussschutzanordnung (10) über in zwei Verbindungsleitungen angeordnete zusätzliche Schutzdioden (14, 15) mit dem Zwischenkreiskondensator (9) verbunden ist, wobei die zusätzliche Schutzdiode (14) der ersten Verbindungsleitung entgegengesetzt zur zusätzlichen Schutzdiode (15) der zweiten Verbindungsleitung durchlässig ist.

6. Schaltungsanordnung nach einem der Ansprüche 1 bis 5,
**dadurch gekennzeichnet, dass** dem Kurzschlussthyristor (11) strombegrenzende Bauteile zugeordnet sind.

## Claims

1. Circuit arrangement having a voltage link converter, which contains an intermediate-circuit capacitor (9) and switching paths (6a to 6e), which are arranged in parallel therewith and have series-connected switching elements (7a to 7e and 8a to 8e), the switching elements (7a to 7e and 8a to 8e) being designed as components which can be switched off, a short-circuit thyristor (11) being provided as protection against short-circuit currents and overvoltages, wherein a short-circuit protection arrangement (10), comprising a parallel circuit of the short-circuit thyristor (11) with pairs of series-connected protective diodes (12a to 12e and 13a to 13e) which conduct in opposition to said short-circuit thyristor (11), is connected to the intermediate-circuit capacitor (9) and to the switching paths (6a to 6e), wherein the short-circuit protection arrangement (10) is connected in parallel with the intermediate-circuit capacitor (9), wherein in each case a connection point between two series-connected switching elements (7a to 7e and 8a to 8e) in a switching path (6a to 6e) is connected to in each case a connection point between two series-connected protective diodes (12a to 12e and 13a to 13e) of the short-circuit protection arrangement (10) and wherein the protective diodes (12a to 12e and 13a to 13e) are not involved in commutation processes of the voltage link converter.

2. Circuit arrangement according to Claim 1,
**characterized in that** the short-circuit protection arrangement (10) is only connected to the intermediate-circuit capacitor (9) and to the switching paths (6a and 6b) of the power supply system side.

3. Circuit arrangement according to Claim 1,
**characterized in that** the short-circuit protection arrangement (10) is only connected to the intermediate-circuit capacitor (9) and to the switching paths (6c to 6e) of the load side.

4. Circuit arrangement according to one of Claims 1 to 3, **characterized in that** the switching elements (7a to 7e and 8a to 8e) in the switching paths (6a to 6e) are IGBTs.

5. Circuit arrangement according to one of Claims 1 to 4, **characterized in that** the short-circuit protection arrangement (10) is connected to the intermediate-circuit capacitor (9) via additional protective diodes (14, 15) arranged in two connecting lines, the additional protective diode (14) in the first connecting line conducting in opposition to the additional protective diode (15) in the second connecting line.

6. Circuit arrangement according to one of Claims 1 to 5, **characterized in that** the short-circuit thyristor (11) has associated current-limiting components.

## Revendications

1. Montage comprenant un convertisseur de tension de circuit intermédiaire, qui comporte un condensateur (9) de circuit intermédiaire et, montées en parallèle à celui-ci, des branches (6a à 6e) de commutation, qui ont des éléments (7a à 7e et 8a à 8e) de commutation montés en série, les éléments (7a à 7e et 8a à 8e) de commutation étant constitués sous la forme de composants pouvant être bloqués, dans lequel pour se protéger de courants de court-circuit et de surtensions, il y a un thyristor (11) de court-circuit, dans lequel au condensateur (9) de circuit intermédiaire et aux branches (6a à 6e) de commutation est relié un agencement (10) de protection de court-circuit constitué d'un montage en parallèle du thyristor (11) de court-circuit ayant des paires, à l'état passant dans le sens contraire, de diodes (12a à 12e et 13a à 13e) de protection montées en série,
dans lequel le montage (10) de protection de court-circuit est monté en parallèle au condensateur (9) de circuit intermédiaire,
dans lequel respectivement un point de connexion entre deux éléments (7a à 7e et 8a à 8e) de commutation montés en série d'une branche (6a à 6e) de commutation est relié respectivement un point de connexion entre deux diodes (12a à 12e et 13a à 13e) de protection montées en série du montage (10) de protection de court-circuit et dans lequel les diodes (12a à 12e et 13a à 13e) de protection ne participent pas à des opérations de commutation du convertisseur de tension du circuit intermédiaire.

2. Montage suivant la revendication 1,
**caractérisé en ce que** le montage (10) de protection de court-circuit n'est relié qu'au condensateur (9) de circuit intermédiaire et aux branches (6a et 6b) de commutation du côté du réseau.

3. Montage suivant la revendication 1,
**caractérisé en ce que** le montage (10) de protection de court-circuit n'est relié qu'au condensateur (9) de circuit intermédiaire et aux branches (6c à 6e) de commutation du côté de la charge.

4. Montage suivant l'une des revendications 1 à 3,
**caractérisé en ce que** les éléments (7a à 7e et 8a à 8e) de commutation des branches (6a à 6e) de commutation sont des IGBT.

5. Montage suivant l'une des revendications 1 à 4,
**caractérisé en ce que** le montage (10) de protection de court-circuit est relié au condensateur (9) de circuit intermédiaire par des diodes (14, 15) de protection supplémentaire montées dans deux lignes de liaison, la diode (14) de protection supplémentaire de la première ligne de liaison à l'état passant dans le sens contraire à la diode (15) de protection supplémentaire de la deuxième ligne de liaison.

6. Montage suivant l'une des revendications 1 à 5,
**caractérisé en ce que** des composants de limitation du courant sont associés au thyristor (11) de court-circuit.
